# EUROPÄISCHE PATENTSCHRIFT

(11) **EP 0 351 614 B1**
(45) Veröffentlichungstag und Bekanntmachung des Hinweises auf die Patenterteilung: **26.10.1994**
(21) Anmeldenummer: 89112035.4
(22) Anmeldetag: 01.07.1989
(51) Int. Cl.: C08J 9/14, C08J 9/12

(54) **Verfahren zur Herstellung von zellhaltigen Kunststoffen nach dem Polyisocyanat-Polyadditionsverfahren mittels lagerstabiler, treibmittelhaltiger Emulsion und diese Emulsionen**
Process for the preparation of cellular synthetic resins by the isocyanate polyaddition process by means of a stable emulsion containing a propellant, and these emulsions
Procédé de préparation de matières plastiques cellulaires par le procédé de polyaddition de polyisocyanates au moyen d'émulsions stables à l'entreposage contenant des agents porogènes et ces émulsions

(30) Priorität: 19.07.1988 DE 3824354
(43) Veröffentlichungstag der Anmeldung: 24.01.1990
(73) Patentinhaber: BASF Aktiengesellschaft, 67063 Ludwigshafen (DE)
(72) Erfinder: Volkert, Otto, Dr., D-6719 Weisenheim (DE)

(56) Entgegenhaltungen:
- FR-A- 2 194 022
- US-A- 3 391 093
- US-A- 3 993 833

## Beschreibung

Gegenstände der Erfindung sind ein Verfahren zur Herstellung von zellhaltigen Kunststoffen nach dem Polyisocyanat-Polyadditionsverfahren, wobei als Treibmittel niedrigsiedende, in organischen Polyisocyanaten (a) oder höhermolekularen Verbindungen mit mindestens zwei reaktiven Wasserstoffatomen (b) schwer oder unlösliche, fluorierte oder perfluorierte Kohlenwasserstoffe mit 3 bis 8 Kohlenstoffatomen, Schwefelhexafluorid oder Mischungen davon verwendet und diese in den Aufbaukomponenten (a), (b), (b) und (c) oder (a) und (b) emulgiert werden sowie diese lagerstabilen, treibmittelhaltigen Emulsionen.

Die Herstellung von zellhaltigen Polyisocyanat-Polyadditionsprodukten, wie z.B. zelligen Polyurethan-Elastomeren und flexiblen, halbharten oder harten Polyurethan-Schaumstoffen, durch Umsetzung von organischen Polyisocyanaten und/oder modifizierten organischen Polyisocyanaten mit höhermolekularen Verbindungen mit mindestens zwei reaktiven Wasserstoffatomen, beispielsweise Polyoxyalkylen-polyaminen und/oder vorzugsweise organischen Polyhydroxylverbindungen mit Molekulargewichten von z.B. 500 bis 12 000 und gegebenenfalls Kettenverlängerungs- und/oder Vernetzungsmitteln mit Molekulargewichten bis ungefähr 500 in Gegenwart von Katalysatoren, Treibmitteln, Hilfsmitteln und/oder Zusatzstoffen ist bekannt aus zahlreichen Patent- und Literaturveröffentlichungen. Durch geeignete Wahl der Aufbaukomponenten Polyisocyanat, höhermolekularen Verbindungen mit reaktiven Wasserstoffatomen und gegebenenfalls Kettenverlängerungs- und/oder Vernetzungsmitteln können nach dieser Methode elastische oder starre, zellhaltige Polyisocyanat-Polyadditionsprodukte sowie alle dazwischen liegende Modifikationen hergestellt werden.

Eine übersicht über die Herstellung von zelligen Polyurethan(PU)-Elastomeren, Polyurethan(PU)-Schaumstoffen und Polyisocyanurat(PIR)-Schaumstoffen, ihre mechanische Eigenschaften und ihre Verwendung wird beispielsweise in den Monographien High Polymers, Band XVI, "Polyurethanes", Teil I und II von J.H. Saunders und K.C. Frisch (Verlag Interscience Publishers, New York 1962 bzw. 1964), Kunststoff-Handbuch, Band VII, "Polyurethane", 1. Auflage 1966, herausgegeben von R. Vieweg und A. Höchtlen und 2. Auflage, 1983, herausgegeben von G. Oertel (Carl Hanser Verlag, München) und "Integralschaumstoffe", herausgegeben von H. Piechota und H. Röhr (Carl Hanser Verlag, München, Wien 1975) gegeben.

Zur Herstellung von zellhaltigen Kunststoffen nach dem Polyisocyanat-Polyadditionsverfahren werden im wesentlichen zwei Arten von Treibmitteln verwendet:
Niedrigsiedende, inerte Flüssigkeiten, die unter dem Einfluß der exothermen Polyadditionsreaktion verdampfen, beispielsweise Alkane wie Butan, Pentan u.a. oder vorzugsweise halogenierte Kohlenwasserstoffe, wie Methylenchlorid, Dichlormonofluormethan, Trichlorfluormethan u.a. und chemische Verbindungen, die durch eine chemische Reaktion oder thermische Zersetzung Treibgase bilden. Beispielhaft genannt seien die Umsetzung von Wasser mit Isocyanaten unter Bildung von Aminen und Kohlendioxid, die synchron zur Polyurethanherstellung abläuft und die Spaltung von thermisch labilen Verbindungen wie z.B. Azoisobuttersäurenitril, das neben Stickstoff als Spaltprodukt toxisches Tetramethylbernsteinsäuredinitril ergibt oder Azodicarbonamid, dessen Verwendung als Bestandteil einer Treibmittelkombination in der EP-A 0 092 740 (CA 1 208 912) beschrieben wird. Während die zuletzt genannte Methode, bei der thermisch labile Verbindungen wie z.B. Azoverbindungen, Hydrazide, Semicarbazide, N-Nitrosoverbindungen, Benzoxazine u.a. (Kunststoffe 66 (1976), 10, Seiten 698 bis 701) üblicherweise in ein vorgefertigtes Polymer eingearbeitet oder auf das Kunststoffgranulat aufgetrommelt und durch Extrusion verschäumt werden, technisch von untergeordneter Bedeutung blieb, finden die physikalisch wirkenden, niedrigsiedenden Flüssigkeiten, insbesondere Chlorfluoralkane, weltweit in großem Maßstabe zur Herstellung von Polyurethan- oder Polyisocyanurat-Schaumstoffen Verwendung. Nachteilig an diesen Treibgasen ist lediglich die Belastung der Umwelt. Bei der Bildung von Treibgasen durch thermische Spaltung oder chemische Reaktion entstehen hingegen Spaltprodukte und/oder reaktive Nebenprodukte, die in das Polyadditionsprodukt eingelagert oder chemisch gebunden werden und zu einer unerwünschten Veränderung der mechanischen Eigenschaften des Kunststoffes führen können. Im Fall der Bildung von Kohlendioxid aus Wasser und Isocyanat entstehen Harnstoffgruppen im Polyadditionsprodukt, die in Abhängigkeit von ihrer Menge zu einer Verbesserung der Druckfestigkeit bis zur Versprödung des Polyurethans führen können.

Nach Angaben der US-A-3 391 093 werden Polyester-polyurethan-Schaumstoffe hergestellt durch Umsetzung von hydroxylgruppenhaltigen Polyestern und Polyisocyanaten in Gegenwart von halogensubstituierten Alkanen mit einem Siedepunkt über -23,3°C (-60°F), die mindestens ein Fluoratom gebunden haben und unterhalb der Verschäumungstemperatur gasförmig sind, als Treibmittel. Da die thermische Stabilität der Treibmittel anscheinend durch das im Alkan gebundene Fluoratom bewirkt wird, werden als geeignete Treibmittel vorzugsweise die in den Polyestern gut löslichen Fluorchlorkohlenwasserstoffe, insbesondere Difluormonochlormethan, verwendet. In welcher Form die als Treibmittel ebenfalls genannten gasförmigen Fluoralkane eingesetzt werden, wird in der Patentpublikation nicht beispielhaft offenbart.

Der Mechanismus der Schaumbildung bei der Herstellung von Polyisocyanat-Polyadditionsprodukten und der Einfluß von oberflächenaktiven Hilfsmitteln auf der Grundlage von Siloxan-oxalkylen-copolymeren auf diese Reaktion wurde von B. Kanner et al. (J. of cellular Plastics, January 1969, Seiten 32 bis 39) beschrieben.

Nach Angaben dieser und anderer Publikationen ist als wesentliches Erfordernis für die Bildung von zellhaltigen Polyisocyanat-Polyadditionsprodukten mit gleichförmiger Zellstruktur und guten mechanischen Eigenschaften die homogene Lösung der Treibmittel, wie z.B. des Kohlendioxids und/oder der inerten, niedrigsiedenden Flüssigkeiten, in den organischen Polyisocyanaten und/oder den Verbindungen mit reaktiven Wasserstoffatomen anzusehen ("Blowing Agents for Polyurethanes" von L.M. Zwolinski in Rubber Age, July 1975, Seiten 50 bis 55 und GB-A-904 003). Falls die Treibmittel nicht in den vorgenannten Aufbaukomponenten löslich sind, werden nur grobporige oder in den meisten Fällen überhaupt keine Schaumstoffe erhalten.

Zur Verminderung dieses Nachteils werden nach Angaben der US-A-4 544 679 spezielle Polyolmischungen mit erhöhter Fluorchlorkohlenwasserstofflöslichkeit eingesetzt und/oder es wird versucht durch Zusatz von teilweise erheblichen Mengen an Lösungsvermittlern homogene Lösungen aus Treibmitteln und den Polyisocyanaten und/oder Polyolen zu erhalten (K. Tanabe, I. Kamemura und S. Kozawa, 28. SPI-Conf. 1984, Seiten 53 bis 57).

Bekannt sind auch oligomere Acrylate, die als Seitengruppen Polyoxyalkylen- und Fluoralkanreste gebunden enthalten, wie z.B. die mehrere fluoraliphatische Seitengruppen enthaltenden Oligomeren mit 5 bis 30 Gew.% Fluor und den Formeln I und II, die im folgenden definiert werden. Ihre Herstellung und Verwendung als Haftvermittler in verstärkten Kunststoffen, wobei diese entweder dem Kunststoff beigemischt oder auf die Füllstoffe oder Verstärkungsfasern aufgetragen werden, wird beschrieben in der DE-B-23 10 857 (US-A- 3 787 351). Ferner finden fluoraliphatische Oligomere nach Angaben der US-A-3 993 833 Verwendung zur Herstellung von druckempfindlichen Klebestreifen mit einer offenzelligen Polyurethanschaumstoffunterlage. Die geeigneten fluoraliphatischen Oligomeren sollen eine begrenzte Löslichkeit in der verschäumbaren Reaktionsmischung zur Bildung der Polyurethanschaumstoffe aufweisen und dadurch in den Polyurethanzellmembranen konzentriert werden. Die gebildeten Polyurethanschaumstoffe erhalten dadurch ein wesentliches Abweisungsvermögen gegenüber Benzin und Wasser. Die genannten Patentschriften enthalten jedoch keine Hinweise über die Wirksamkeit der oligomeren Acrylate als Emulgator für die Emulgierung von niedrigsiedenden, teilweise oder vollständig fluorierten aliphatischen oder cycloaliphatischen Kohlenwasserstoffen oder Schwefelhexafluorid in organischen Polyisocyanaten oder höhermolekularen, mit NCO-Gruppen reaktiven Verbindungen.

Die Aufgabe der Vorliegenden Erfindung bestand darin, die als Treibmittel zur Herstellung von zellhaltigen Kunststoffen nach dem Polyisocyanat-Polyadditionsverfahren bekannten Fluorchlorkohlenwasserstoffe ganz oder zumindest teilweise durch andere, umweltfreundliche Treibmittel zu ersetzen.

Diese Aufgabe konnte überraschenderweise gelöst werden mit Hilfe von lagerstabilen, treibmittelhaltigen Emulsionen aus niedrigsiedenden, bei Raumtemperatur flüssigen, teilweise oder vollständig fluorierten (cyclo)aliphatischen Kohlenwasserstoffen und organischen, gegebenenfalls modifizierten Polyisocyanaten oder höhermolekularen, mit NCO-Gruppen reaktiven Verbindungen.

Gegenstand der Erfindung ist somit ein Verfahren zur Herstellung von zellhaltigen Kunststoffen nach dem Polyisocyanat-Polyadditionsverfahren durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmittel in Gegenwart von
d) Treibmitteln,
e) Katalysatoren.
f) Hilfsmitteln und/oder Zusatzstoffen,
das dadurch gekennzeichnet ist, daß man als Treibmittel (d) niedrigsiedende bei Raumtemperatur flüssige, in (a) bis (c) schwer- oder unlösliche, teilweise oder vollständig fluorierte, aliphatische oder cycloaliphatische kohlenwasserstoffe mit 3 bis 8 C-Atomen oder Mischungen davon verwendet und diese in den Aufbaukomponenten (a), (b), (b) und (c) oder (a) und (b) emulgiert.

Gegenstände der Erfindung sind ferner lagerstabile, treibmittelhaltige Emulsionen, die enthalten
i) mindestens einen niedrigsiedenden, bei Raumtemperatur flüssigen, in (a) oder (b) schwer- oder unlöslichen, teilweise oder vollständig fluorierten, aliphatischen und/oder cycloaliphatischen Kohlenwasserstoff mit 3 bis 8 Kohlenstoffatomen als Treibmittel (d)
ii) mindestens ein organisches und/oder modifiziertes organisches Polyisocyanat (a) oder mindestens eine höhermolekulare verbindung mit mindestens zwei reaktiven Wasserstoffatomen (b) oder Mischungen aus (b) und niedermolekularen Kettenverlängerungs- und/oder Vernetzungsmitteln (c) und
iii) mindestens ein oligomeres Acrylat, das als Seitengruppen Polyoxyalkylen- und Fluoralkanreste gebunden enthält, als Emulgator, wobei als oligomeres Acrylat, insbesondere ein mehrere fluoraliphatische Seitengruppen enthaltendes Oligomeres mit einem Fluorgehalt von 5 bis 30 Gew.%, bezogen auf das Gesamtgewicht, und den Formeln

   (R_{f})ₘQ(RQ'A)ₙ (I)

   oder

   [(R_{f})ₘQ(RQ'A')ₙ]_{z} (II)

   Verwendung findet, in welchen bedeuten:
   - R_{f}: eine fluoraliphatische Gruppe mit 3 bis 20 Kohlenstoffatomen und 40 bis 78 Gew.% Fluor, wobei die Endgruppe mindestens 3 vollständig fluorierte Kohlenstoffatome enthält,
   - R: eine in Kunststoff löslich machende zweiwertige organische Gruppe, die frei von funktionellen Gruppen ist, welche aktiven Wasserstoff enthalten,
   - Q: eine Bindungsgruppe durch die die R_{f}- und R-Gruppen kovalent miteinander verbunden sind,
   - A: eine einwertige organische Endgruppe,
   - A': A oder eine Valenzbindung, unter der Voraussetzung, daß mindestens ein A' eine Valenzbindung ist, die eine Q-gebundene Gruppe mit einem anderen Q verbindet,
   - Q': eine Bindungsgruppe ist, durch die A oder A' und R kovalent aneinander gebunden sind, und
   - m, n und z: ganze Zahlen von mindestens 2 sind,
   und die Verwendung der lagerstabilen, treibmittelhaltigen Emulsionen zur Herstellung von Urethan- oder Urethan- und Isocyanuratgruppen enthaltenden Schaumstoffen oder Urethan- und/oder Harnstoffgruppen enthaltenden zelligen Elastomeren nach dem Polyisocyanat-Polyadditionsverfahren.

Durch die Emulgierung der niedrigsiedenden, in den Aufbaukomponenten (a), (b) oder den Mischungen aus (b) und (c) schwer- oder unlöslichen fluorierten Kohlenwasserstoffe, perfluorierten Kohlenwasserstoffe oder Schwefelhexafluorid in den Aufbaukomponenten (a), (b) oder (b) und (c), insbesondere mittels geeigneter oligomerer Acrylate mit Polyoxyalkylen- und Fluoralkanresten als Seitengruppen als Emulgator, werden Emulsionen erhalten, die in ihrem Schaumverhalten treibmittelhaltigen, homogenen Lösungen entsprechen. Dies war überraschend, da nach den gängigen Vorstellungen zum Schaumbildungsmechanismus aus in Verbindungen mit mindestens zwei reaktiven Wasserstoffatomen oder in Polyisocyanaten schwerlöslichen Treibmitteln keine Schaumstoffe hergestellt werden können.

Durch die gute Emulgierung der erfindungsgemäß geeigneten, schwer- oder unlöslichen Treibmittel und ihre Verdampfung durch die bei der Polyisocyanat-Polyadditionsreaktion entstehende Wärme werden überraschenderweise zellige Kunststoffe mit gleichmäßiger und feinzelliger Zellstruktur erhalten.

Zu den Aufbaukomponenten (a) bis (f), insbesondere den erfindungsgemäß verwendbaren Treibmitteln (d) und den zu ihrer Emulgierung als Emulgator hervorragend geeigneten und daher insbesondere eingesetzten oligomeren Acrylaten mit Polyoxyalkylen- und Fluoralkanresten als Seitengruppen, zur Herstellung der zelligen Polyisocyanat-Polyadditionsprodukte, vorzugsweise der Urethangruppen oder Urethan- und Isocyanuratgruppen enthaltenden Schaumstoffe, ist folgendes auszuführen:
a) Als organische Polyisocyanate kommen die an sich bekannten aliphatischen, cycloaliphatischen, araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4′-, 2,2′- und 2,4′-Dicyclohexylmethan-diisocyanat sowie die entsprechenden Isomerengemische und vorzugsweise aromatischen Di- und Polyisocyanate, wie z.B. 2,4-und 2,6-Toluylen-diisocyanat und die entsprechenden Isomerengemische, 4,4′-, 2,4′- und 2,2′-Diphenylmethan- diisocyanat und die entsprechenden Isomerengemische, Mischungen aus 4,4′- und 2,4′-Diphenylmethan-diisocyanaten, Polyphenyl-polymethylen-polyisocyanate, Mischungen aus 4,4′-, 2,4′- und 2,2′-Diphenylmethan-diisocyanaten und Polyphenyl-polymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 800 modifiziertes 4,4′-Diphenylmethan-diisocyanat oder 2,4- bzw. 2,6-Toluylen-diisocyanat, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyester-und/oder vorzugsweise Polyether-polyolen und 4,4′-Diphenylmethan-diisocyanat, Mischungen aus 2,4′- und 4,4′-Diphenylmethan-diisocyanat, 2,4- und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4′-, 2,4′- und/oder 2,2′-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,4′-, 4,4′-Diphenylmethan-diisocyanat, Roh-MDI, 2,4- und/oder 2,6-Toluylen-diisocyanat gegebenenfalls gemischt werden.
   Besonders bewährt haben sich als organische Polyisocyanate und kommen vorzugsweise zur Anwendung zur Herstellung von zelligen Elastomeren: NCO-Gruppen enthaltende Prepolymere mit einem NCO-Gehalt von 25 bis 9 Gew.%, insbesondere auf Basis von Polyether- oder Polyester-polyolen und einem oder mehreren Diphenylmethan-diisocyanat-Isomeren, vorteilhafterweise 4,4′-Diphenylmethan-diisocyanat und/oder modifizierte Urethangruppen enthaltende organische Polyisocyanate mit einem NCO-Gehalt von 33,6 bis 15 Gew.%, insbesondere auf Basis von 4,4′-Diphenylmethan-diisocyanat oder Diphenylmethan-diisocyanat-Isomerengemischen, zur Herstellung von flexiblen Polyurethanschaumstoffen: Mischungen aus 2,4- und 2,6-Toluylen-diisocyanaten, Mischungen aus Toluylen-diisocyanaten und Roh-MDI oder insbesondere Mischungen aus den vorgenannten Prepolymeren auf Basis von Diphenylmethan-diisocyanat-Isomeren und Roh-MDI und zur Herstellung von Polyurethan- oder Polyurethan-Polyisocyanurat-Hartschaumstoffen: Roh-MDI.
b) Als höhermolekulare Verbindungen b) mit mindestens zwei reaktiven Wasserstoffatomen werden zweckmäßigerweise solche mit einer Funktionalität von 2 bis 8, vorzugsweise 2 bis 6 und einem Molekulargewicht von 400 bis 8000, vorzugsweise von 1200 bis 6000 verwendet. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol, Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 4, insbesondere 2 bis 3 und ein Molekulargewicht von 480 bis 3000, vorzugsweise 1200 bis 3000 und insbesondere 1800 bis 2500.
   Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N′-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4′-, 2,4′- und 2,2′-Diamino-diphenylmethan.
   Als Startermoleküle kommen ferner in Betracht: Alkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Saccharose.
   Die Polyether-polyole, vorzugsweise Polyoxypropylen- und Polyoxypropylen-polyoxyethylen-polyole, besitzen eine Funktionalität von vorzugsweise 2 bis 6 und insbesondere 2 bis 4 und Molekulargewichte von 400 bis 8000, vorzugsweise 1200 bis 6000 und insbesondere 1800 bis 4000 und geeignete Polyoxytetramethylen-glykole ein Molekulargewicht bis ungefähr 3500.
   Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyether-polyole können ebenso wie die Polyester-polyole einzeln oder in Form von Mischungen verwendet werden. Ferner können sie mit den Pfropf-polyether-polyolen oder Polyester-polyolen sowie den hydroxylgruppenhaltigen Polyesteramiden, Polyacetalen, Polycarbonaten und/oder Polyether-polyaminen gemischt werden.
   Als hydroxylgruppenhaltige Polyacetale kommen z.B. die aus Glykolen, wie Diethylenglykol, Triethylenglykol, 4,4′-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die besipielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyether-polyamine können aus den obengenannten Polyetherpolyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylen-polyolen mit Aminen oder Ammoniak in Gegenwart von Wasserstoff und Katalysatoren (DE 12 15 373).
c) Die Polyisocyanat-Polyadditionsprodukte und vorzugsweise Urethan- oder Urethan- und Isocyanuratgruppen enthaltende Schaumstoffe können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Zur Herstellung zelliger Polyurethan-Polyharnstoff-Elastomerer können neben den obengenannten Diolen und/oder Triolen oder im Gemisch mit diesen als Kettenverlängerungs- oder Vernetzungsmittel auch sekundäre aromatische Diamine, primäre aromatische Diamine, 3,3'-di- und/oder 3,3', 5,5'-tetraalkylsubstituierte Diamino-diphenylmethane Anwendung finden.
   Als sek. aromatische Diamine seine beispielhaft genannt: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Di-sek-pentyl-, N,N'-Di-sek-hexyl-, N,N'-Di-sek-decyl-, N,N'-Dicyclohexyl-p-bzw. -m-Phenylendiamin, N,N'Dimethyl-, N,N'-Diethyl-, N,N'-Diisopropyl-, N,N'-Di-sek-butyl-, N,N'-Dicyclohexyl-4,4'-diaminodiphenylmethan und N,N'-Di-sek-butyl-benzidin.
   Als aromatische Diamine werden zweckmäßigerweise solche verwendet, die in ortho-Stellung zu den Aminogruppen mindestens einen Alkylsubstituenten besitzen, bei Raumtemperatur flüssig und mit der Komponente (b), insbesondere den Polyether-polyolen, mischbar sind. Bewährt haben sich ferner alkylsubstituierte meta-Phenylendiamine der Formeln 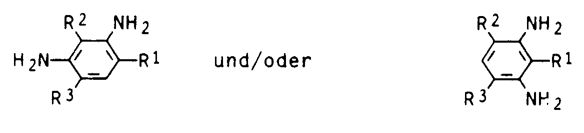 in den R³ und R² gleich oder verschieden sind und einen Methyl, Ethyl-, Propyl- und Isopropylrest bedeuten und R¹ ein linearer oder verzweigter Alkylrest mit 1 bis 10, vorzugsweise 4 bis 6 Kohlenstoffatomen ist.
   Insbesondere bewährt haben sich solche Alkylreste R¹, bei denen die Verzweigungsstelle am C¹-Kohlenstoffatom sitzt. Als Reste R¹ seien beispielhaft genannt der Methyl-, Ethyl-, Isopropyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propyl-Rest.
   Als alkylsubstituierte m-Phenylendiamine kommen beispielsweise in Betracht: 2,4-Dimethyl-6-cyclohexyl-, 2-Cyclohexyl-4,6-diethyl-, 2-Cyclohexyl-2,6-isopropyl-, 2,4-Dimethyl-6-(1-ethyl-n-propyl)-, 2,4-Dimethyl-6-(1,1-dimethyl-n-propyl)-, 2-(1-Methyl-n-butyl)-4,6-dimethylphenylendiamin-1,3. Vorzugsweise verwendet werden 1-Methyl-3,5-diethyl-2,4- bzw. -2,6-phenylendiamine, 2,4-Dimethyl-6-tert.butyl-, 2,4-Dimethyl-6-isooctyl-und 2,4-Dimethyl-6-cyclohexyl-m-phenylendiamin-1,3.
   Geeignete 3,3'-di- und 3,3',5,5'-tetra-n-alkylsubstituierte 4,4'-Diaminodiphenylmethane sind beispielsweise 3,3'-Di-,3,3',5,5'-Tetramethyl-, 3,3'-Di-,3,3',5,5'-Tetraethyl-, 3,3'-Di-, und 3,3',5,5'-Tetra-n-propyl-4,4'-diaminodiphenylmethan.
   Vorzugsweise verwendet werden Diamino-diphenylmethane der Formel 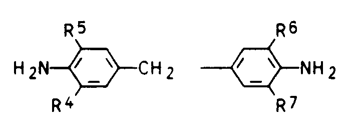 in der R⁴, R⁵, R⁶ und R⁷ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die 4,4'-Diamino-diphenylmethane können auch im Gemisch mit Isomeren der Formeln 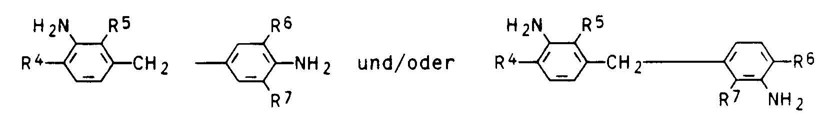 verwendet werden, wobei R⁴, R⁵, R⁶ und R⁷ die obengenannte Bedeutung haben.
   Vorzugsweise verwendet werden 3,5-Dimethyl-3', 5'-diisopropyl- und 3,3',5,5'-Tetraisopropyl-4,4'-diamino-diphenylmethan. Die Diamino-diphenylmethane können einzeln oder in Form von Mischungen eingesetzt werden.
   Die genannten Kettenverlängerungsmittel und/oder Vernetzungsmittel (c) können einzeln oder als Mischungen von gleichen oder verschiedenen Verbindungsarten verwendet werden.
   Sofern Kettenverlängerungsmittel, Vernetzungsmittel oder Mischungen davon Anwendung finden, kommen diese zweckmäßigerweise in Mengen von 2 bis 60 Gew.%. vorzugsweise 8 bis 50 Gew.% und insbesondere 10 bis 40 Gew.%, bezogen auf das Gewicht der Komponenten (b) und (c) zum Einsatz.
d) Erfindungsgemäß finden als Treibmittel (d) niedrigsiedende, in (a), (b), (c) oder Mischungen aus (b) und (c) schwer- oder unlösliche, teilweise oder vollständig fluorierte, bei Raumtemperatur flüssige, aliphatische oder cycloaliphatische Kohlenwasserstoffe mit 3 bis 8 C-Atomen Verwendung, vorzugsweise mit 3 bis 6 C-Atomen. Geeignete bei Raumtemperatur flüssige, aliphatische oder cycloaliphatische Perfluoralkane sind z.B. Perfluorpentan, Perfluorhexan, Perfluorheptan und Perfluoroctan oder Perfluorcyclopentan und Perfluorcyclohexan. Besonders bewährt haben sich und daher vorzugsweise Anwendung finden Perfluorpentan und Perfluorhexan. Die beispielhaft genannten fluorierten oder perfluorierten Kohlenwasserstoffe können einzeln oder in Form von Mischungen aus zwei oder mehreren Treibmitteln eingesetzt werden.
   Die erfindungsgemäß als Treibmittel verwendbaren fluorierten Verbindungen werden zur Verarbeitung in den Aufbaukomponenten (a), (b) oder in Mischungen aus (b) und (c) emulgiert. Zur Erzielung derartiger lagerstabiler, treibmittelhaltiger Emulsionen werden als Emulgator vorteilhafterweise oligomere Acrylate verwendet, die als Seitengruppen Polyoxyalkylen- und Fluoralkanreste gebunden enthalten. Als Emulgator insbesondere eingesetzt werden mehrere fluoraliphatische Seitengruppen enthaltende Oligomere mit einem Fluorgehalt von 5 bis 30 Gew.% Fluor und den Formeln

   (R_{f})ₘQ(RQ'A)ₙ (I)

   oder 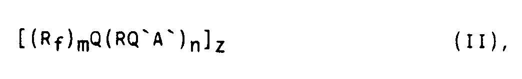 in denen bedeuten:
   - R_{f}: eine fluoraliphatische Gruppe mit 3 bis 20 Kohlenstoffatomen und 40 bis 78 Gew.% Fluor, wobei die Endgruppe mindestens 3 vollständig fluorierte Kohlenstoffatome enthält,
   - R: eine in Kunststoff löslich machende zweiwertige organische Gruppe, die frei von funktionellen Gruppen ist, welche aktiven Wasserstoff enthalten,
   - Q: eine Bindungsgruppe durch die die R_{f}- und R-Gruppen kovalent miteinander verbunden sind,
   - A: eine einwertige organische Endgruppe,
   - A′: A oder eine Valenzbindung, unter der Voraussetzung, daß mindestens ein A' eine Valenzbindung ist, die eine Q-gebundene Gruppe mit einem anderen Q verbindet,
   - Q': eine Bindungsgruppe ist, durch die A oder A′ und R kovalent aneinander gebunden sind, und
   - m, n und z: ganze Zahlen von mindestens 2 sind.

   Solche vorzüglich geeignete, mehrere fluoraliphatische Seitengruppen enthaltende Oligomere mit 5 bis 30 Gew.% Fluor sind in der Kunststoffchemie, z.B. als Haftvermittler in verstärkten Kunststoffen, hinreichend bekannt, so daß sich nähere Ausführungen erübrigen. Die Struktur derartiger Oligomerer und Verfahren zu ihrer Herstellung, sowie geeignete fluoraliphatische Reste und aktiven Wasserstoff enthaltende Vorläufer, die zur Herstellung der beschriebenen Oligomeren verwendet werden können, werden z.B. ausführlich beschrieben in der DE-B-23 10 357 und der hierzu äquivalenten US-Patentschrift Nr. 3 787 351 sowie den dort genannten Literatur- und Patentpublikationen. Die Ausführungen dieser Publikationen, insbesondere der US 3 787 351, werden in vollem Umfange in die Anmeldebeschreibung incorporiert und als wesentlicher Bestandteil der Anmeldebeschreibung angesehen.
   Besonders bewährt haben sich und daher vorzugsweise Anwendung finden Oligomere der Formeln I oder II, in denen R eine Polyoxyalkylengruppe ist, insbesondere eine Polyoxyalkylengruppe, die durch die Formel (OR′)ₓ beschrieben wird und in der bedeuten: R′ eine Alkylengruppe mit 2 bis 4 Kohlenstoffatomen, z.B. eine 1,2-, 1,3-Propylen-, 1,2-Dimethyl-ethylen-, 1,4-Butylengruppe und insbesondere eine Ethylengruppe und x eine ganze Zahl von gleich oder größer als 5 bis z.B. 100 oder mehr, vorzugsweise von 10 bis 75 und R_{f} eine gerad- oder verzweigtkettige aliphatische, cycloaliphatische oder aliphatisch-cycloaliphatische Gruppe mit 3 bis 20 Kohlenstoffatomen, vorzugsweise 6 bis 12 Kohlenstoffatomen ist, die 40 bis 78 Gew.%, vorzugsweise 50 bis 77 Gew.% kohlenstoffgebundenen Fluor enthält und wobei mindestens 3 der endständigen Kohlenstoffatome der gerad-oder verzweigtkettigen Alkylgruppe perfluoriert sind oder vorzugsweise die Endgruppe die Formel CF₃CF₂CF₂- besitzt. Bevorzugt Anwendung finden Reste R_{f}, die praktisch vollständig fluoriert sind.
   Die Funktion der Bindungsgruppen Q und Q′ besteht darin, die fluor(cyclo)aliphatischen Reste R_{f}, die löslichmachende Reste R und die Reste A und A′ in dem Oligomeren kovalent miteinander zu verbinden. Als Bindungsgruppen Q und Q′ kommen beispielsweise in Betracht: Mehrwertige aliphatische Gruppen, wie z.B.
   -CH₂CH₂-, -CH₂CH〈
   oder -CH₂CH(CH₂-)₂-Gruppen, mehrwertige aromatische Gruppen, wie z.B. 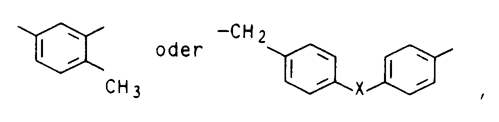 wobei X ein Brückenglied aus der Gruppe -CH₂-, 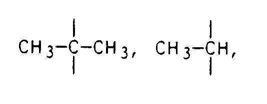 -O-, -CO-, -S-, -SO₂-, -SO-, -P(OH)-, -NH-, -N(CH₃)-, -N(C₂H₅)-, oder Kombinationen davon, wie z.B. Oxalkylen, Iminoalkylen, Carbonamid, Sulfonamid u.a. bedeutet, Urethane wie z.B. -CH₂CH₂OCONH-, Harnstoffe, wie z.B. -NHCONH- und Ester, wie z.B. -CO-O-CH₂-.
   Da für die Struktur der Bindungsgruppen Q und Q' eine große Variationsmöglichkeit gegeben ist und der Fluorgehalt durch den Rest R_{f} bestimmt wird, kann der Fluorgehalt der Oligomeren in einem breiten Bereich schwanken. Als Emulgator besonders bewährt haben sich Oligomere mit einem Fluorgehalt von 5 bis 30 Gew.%, vorzugsweise von 5 bis 10 Gew.%, bezogen auf das Gesamtgewicht.
   Die einwertige endständige organische Gruppe A ist kovalent durch Q' an den löslichmachenden Rest R, z.B. an den Polyoxyalkylenrest, gebunden. Obwohl die Struktur von A variieren kann, ergänzt dieser Rest zweckmäßigerweise den löslichmachenden Teil, indem er die gewünschte Löslichkeit des Oligomeren in den höhermolekularen Verbindungen mit mindestens 2 reaktiven Wasserstoffatomen (b) und gegebenenfalls den Kettenverlängerungs- und/oder Vernetzungsmitteln (c) zur Bildung der Schaumstoffe erhält oder vorteilhafterweise zusätzlich erhöht. Als geeignete Reste A seien beispielsweise genannt: Acylgruppen wie z.B. die Benzoyl- oder Acetylgruppe, Alkylgruppen mit 1 bis 3 Kohlenstoffatomen, wie z.B. die Methyl- oder Isopropylgruppe, Hydroxylalkylgruppen wie z.B. die Hydroxyethyl- oder Hydroxypropylgruppe, Alkylmercaptogruppen wie z.B. die Mercaptoethylgruppe, Aminoalkylgruppen wie z.B. die Aminoethylgruppe oder gegebenenfalls substituierte Arylreste, z.B. gegebenenfalls mit Halogenatomen, beispielsweise Chloratomen, Alkyl-, Alkoxy-, Hydroxy-oder Aminogruppen substituierte Phenylreste. Im allgemeinen macht Q'A weniger als 50 Gew.% des Restes (RQ'A) aus.
   Die als Emulgator geeigneten oligomeren Acrylate mit Polyoxyalkylen- und Fluoralkanresten als Seitengruppen werden zweckmäßigerweise in einer Menge von 0,01 bis 6 Gew.-Teilen, vorzugsweise 0,2 bis 3,5 Gew.-Teilen und insbesondere 0,5 bis 2,0 Gew.-Teilen, bezogen auf 100 Gew.-Teile der Aufbaukomponenten (a), (b) oder der Mischung aus (b) und (c) eingesetzt.
   Zur Emulgierung der erfindungsgemäß als Treibmittel (d) verwendbaren fluorierten Kohlenwasserstoffe, perfluorierten Kohlenwasserstoffe und/oder Schwefelhexafluorid mittels der oben beschriebenen Acrylatemulgatoren eignen sich, wie bereits ausgeführt wurde, die organischen und/oder modifizierten organischen Polyisocyanate (a) und die höhermolekularen Verbindungen mit mindestens zwei reaktiven Wasserstoffatomen (b). Geeignet sind ferner Mischungen aus (b) und niedermolekularen Kettenverlängerungs- und/oder -vernetzungsmitteln (c). Die Treibmittel (d), die vorteilhafterweise in einer Menge von 1 bis 150 Gew.-Teilen, vorzugsweise 1 bis 70 Gew.-Teilen und insbesondere 5 bis 50 Gew.-Teilen pro 100 Gew.-Teilen von (a) oder (b) Anwendung finden, können zur Bildung der lagerstabilen Emulsionen sowohl in (a) wie in (b) oder in Mischungen aus (b) und (c) emulgiert werden. Aus verarbeitungstechnischen Gründen kann es sich als vorteilhaft erweisen, eine Teilmenge des Treibmittels (d) in (a) und die restliche Teilmenge des Treibmittels in (b) oder der Mischung aus (b) und (c) zu emulgieren oder bei Verwendung von verschiedenartigen Treibmitteln (d) kann ein Treibmittel (d) in (a) oder (b) und das andere oder die anderen Treibmittel (d) in der verbleibenden anderen Aufbaukomponente emulgiert werden.
   Bei Verwendung von organischen und/oder modifizierten organischen Polyisocyanaten (a) als andere Emulsionsphase finden vorzugsweise aromatische Polyisocyanate ausgewählt aus der Gruppe 2,4-, 2,6-Toluylen-diisocyanat oder Mischungen der genannten Isomeren, 4,4′-, 2,4′- und 2,2′-Diphenylmethan-diisocyanat oder Mischungen aus mindestens zwei der genannten Isomeren und Mischungen aus Diphenylmethan-diisocyanaten und Polyphenyl-polymethylen-polyisocyanaten Anwendung. Sofern die organischen Polyisocyante bei Raumtemperatur kristallin sind, werden sie durch Mischen mit flüssigen Polyisocyanaten und/oder durch geeignete partielle Modifizerung, wie z.B. Carbodiimidisierung und/oder Urethanisierung, verflüssigt.
   Als andere Emulsionsphase finden jedoch vorzugsweise die höhermolekularen Verbindungen mit mindestens zwei reaktiven Wasserstoffatomen Verwendung. Insbesondere geeignet sind Polyester-polyole oder deren Gemische mit einer Funktionalität von 2 bis 3 und einen Molekulargewicht von 480 bis 3000 und Polyether-polyole oder deren Gemische mit einer Funktionalität von 2 bis 6 und einem Molekulargewicht von 400 bis 8000, wobei diese zweckmäßigerweise ausgewählt sind aus der Gruppe der Polyoxyethylen-, Polyoxypropylen-, Polyoxypropylen-polyoxyethylenpolyole und Polyoxytetramethylen-glykole oder Mischungen davon.
   Die erfindungsgemäßen lagerstabilen, treibmittelhaltigen Emulsionen enthalten somit oder bestehen vorzugsweise aus
   i) 1 bis 150 Gew.-Teilen, vorzugsweise 1 bis 70 Gew.-Teilen und insbesondere 5 bis 50 Gew.-Teilen pro 100 Gew.-Teilen von (a) oder (b), mindestens eines niedrigsiedenden, in (a) oder (b) Schwer- oder unlöslichen, teilweise oder vollständig fluorierten, aliphatischen und/oder cycloaliphatischen Kohlenwasserstoffs mit 3 bis 8 Kohlenstoffatomen und/oder Schwefelhexafluorid als Treibmittel (d),
   ii) mindestens einem organischen und/oder modifizierten organischen Polyisocyanat (a) oder mindestens einer höhermolekularen Verbindung mit mindestens zwei reaktiven Wasserstoffatomen (b) oder Mischungen aus (b) und niedermolekularen Kettenverlängerungs- und/oder Vernetzungsmitteln (c) und
   iii) 0,01 bis 6,0 Gew.-Teilen, vorzugsweise 0,2 bis 3,5 Gew.-Teilen pro 100 Gew.-Teilen von (a) oder (b) mindestens eines oligomeren Acrylats, das als Seitengruppen Polyoxyalkylen- und Fluoralkanreste gebunden enthält, als Emulgator.

   Zur Herstellung der lagerstabilen, treibmittelhaltigen Emulsionen werden die Aufbaukomponenten (a) oder (b) bzw. Mischungen aus (b) und (c) und das Treibmittel (d) in Gegenwart des oligomeren Acrylats bei Temperaturen von 0 bis 70°C, vorzugsweise von 20 bis 40°C intensiv vermischt. Als geeignete Mischaggregate hierfür seien beispielhaft genannt: statische Mischer, wie z.B. SMX der Firma Sulzer (Schweiz) oder dynamische Mischer, wie z.B. Ultra-Turrax® der Firma Hanke und Kunkel (BRD).
   Zusätzlich zu den erfindungsgemäß verwendbaren Treibmitteln (d) bzw. Treibmittelemulsionen eignet sich auch Wasser als Treibmittel, das mit den organischen, gegebenenfalls modifizierten Polyisocyanaten (a) unter Bildung von Kohlendioxid und Harnstoffgruppen reagiert und dadurch die Druckfestigkeit der Endprodukte beeinflußt. Da die in den Polyester- und Polyether-polyolen als Nebenprodukt enthaltene Wassermenge meist ausreicht, bedarf es vielfach keiner separaten Wasserzugabe. Sofern jedoch der Polyurethan-Formulierung zusätzlich Wasser einverleibt werden muß, wird dieses üblicherweise in Mengen von 0,05 bis 2 Gew.%, vorzugsweise von 0,1 bis 1, Gew.%, bezogen auf das Gewicht der Aufbaukomponente (b) verwendet.
   Die zweckmäßigste Menge an fluorierten und/oder perfluorierten Kohlenwasserstoffen und/oder Schwefelhexafluorid, zur Herstellung der zelligen Polyisocyanat-Polyadditionsprodukte hängt ab von der Dichte, die man erreichen will und der gegebenenfalls eingesetzten Wassermenge. Im allgemeinen liefern Mengen von 1 bis 60 Gew.-Teilen, vorzugsweise 5 bis 40 Gew.-Teilen und insbesondere 10 bis 25 Gew.-Teilen des Treibmittels (d) bezogen auf 100 Gew.-Teile der Aufbaukomponenten (a) bis (c) oder (a) und (b) zufriedenstellende Ergebnisse.
e) Als Katalysatoren (e) zur Herstellung der zelligen Kunststoffe nach dem Polyisocyanat-Polyadditionsverfahren werden insbesondere Verbindungen verwendet, die die Reaktion der Hydroxylgruppen enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielswiese Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N′,N′-Tetramethylethylendiamin, N,N,N′,N′-Tetramethyl-butandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.
   Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination bezogen auf das Gewicht der Komponente (b).
f) Der Reaktionsmischung zur Herstellung der zelligen Kunststoffe nach dem Polyisocyanat-Polyadditionsverfahren können gegebenenfalls auch noch Hilfsmittel und/oder Zusatzstoffe (f) einverleibt werden. Genannt seien beispielsweise oberflächenaktive Substanzen, Schaumstabilisatoren, Zellregler, Füllstoffe, Farbstoffe, Pigment, Flammschutzmittel, Hydrolyseschutzmittel, fungistatische und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.
   Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril, Polyurethan-, Polyesterfasern auf der Grundlage von aromatischen und/oder aliphatischen Dicarbonsäureestern und insbesondere Kohlenstoffasern.
   Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt, wobei jedoch der Gehalt an Matten, Vliesen und Geweben aus natürlichen und synthetischen Fasern Werte bis 80 Gew.% erreichen kann.
   Geeignete Flammschutzmittel sind beispielsweise Trikresylphosphat, Tris-2-chlorethylphosphat, Tris-chlorpropylphosphat und Tris-2,3-dibrompropylphosphat.
   Außer den bereits genannten halogensubstituierten Phosphaten können auch anorganische Flammschutzmittel, wie rotor Phosphor, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Maisstärke zum Flammfestmachen der Polyisocyanat-polyadditionsprodukte verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile der Komponente (b) zu verwenden.
   Nähere Angaben über die oben genannten anderen übliche Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.
   Zur Herstellung der zelligen Harnstoff- und/oder vorzugsweise Urethangruppen enthaltenden Kunststoffe werden die organischen Polyisocyanate (a), höhermolekularen Verbindungen mit mindestens zwei reaktiven Wasserstoffatomen (b) und gegebenenfalls Kettenverlängerungs- und/oder Vernetzungsmittel (c) in solchen Mengen zur Umsetzung gebracht, daß das Äquivalenz-Verhältnis von NCO-Gruppen der Polyisocanate (a) zur Summe der reaktiven Wasserstoffatome der Komponenten (b) und gegebenenfalls (c) 1:0,85 bis 1,25, vorzugsweise 1:0,95 bis 1,15 beträgt. Falls die zelligen Kunststoffe zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und gegebenenfalls (c) von 1,5 bis 60:1, vorzugsweise 1,5 bis 8:1 angewandt.
   Die zellhaltigen Kunststoffe aus Polyisocyanat-polyadditionsprodukten, vorzugsweise zelligen Elastomeren oder insbesondere Schaumstoffe werden vorteilhafterweise nach dem one shot-Verfahren, beispielsweise mit Hilfe der Reaktionsspritzguß-, Hochdruck- oder Niederdruck-Technik in offenen oder geschlossenen Formwerkzeugen, beispielsweise metallischen Formwerkzeugen hergestellt. Als besonders vorteilhaft hat es sich erwiesen, nach dem Zweikomponenten-Verfahren zu arbeiten und die Aufbaukomponenten (b), (d), (e) und gegebenenfalls (c) und (f) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.
   Die Ausgangskomponenten werden bei einer Temperatur von 15 bis 90°C, vorzugsweise von 20 bis 35°C gemischt und in das offene oder gegebenenfalls unter erhöhtem Druck in das geschlossene Formwerkzeug eingebracht. Die Vermischung kann, wie bereits dargelegt wurde, mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 60°C, vorzugsweise 30 bis 60°C und insbesondere 45 bis 50°C.
   Die nach dem erfindungsgemäßen Verfahren hergestellten zelligen Elastomeren bessitzen Dichten von ungefähr 0,76 bis 1,0 g/cm³, vorzugsweise von 0,9 bis 1,0 g/cm³, wobei die Dichte von füllstoffhaltigen Produkten höhere Werte, z.B. bis 1,4 g/cm³ und mehr erreichen kann. Formkörper aus derartigen zelligen Elastomeren finden Verwendung in der Automobilindustrie, beispielsweise als Kopfstützen, Außenteile, wie z.B. Heckspoiler und Stoßfänger und Innenauskleidungen sowie als Schuhsohlen.
   Die nach dem erfindungsgemäßen Verfahren hergestellten weichelastischen, halbharten und harten Schaumstoffe sowie die entsprechenden Integralschaumstoffe weisen eine Dichte von 0,02 bis 0,75 g/cm³ auf, wobei die Dichte der Schaumstoffe vorzugsweise 0,025 bis 0,24 g/cm³ und insbesondere 0,03 bis 0,1 g/cm³ und die Dichte der Integralschaumstoffe vorzugsweise 0,08 bis 0,75 g/cm³, und insbesondere 0,24 bis 0,6 g/cm³ betragen. Die Schaumstoffe und Integralschaumstoffe werden z.B. verwendet in der Fahrzeug-, z.B. Automobil-, Flugzeug- und Schiffbauindustrie, der Möbel und Sportartikelindustrie als beispielsweise Polstermaterialien, Gehäuseteile, Skiinnenschuh, Skikern u.a. Besonders eignen sie sich als Isolationsmaterial im Bau- und Kühlschranksektor.
   Die erfindungsgemäßen lagerstabilen, treibmittelhaltigen Emulsionen finden insbesondere Verwendung zur Herstellung von Urethan- oder Urethan- und Isocyanuratgruppen enthaltenden Schaumstoffen und Urethan- und/oder Harnstoffgruppen enthaltenden zelligen Elastomeren nach dem Polyisocyanat-Polyadditionsverfahren.

### Beispiele

### Beispiel 1

a) Herstellung der treibmittelhaltigen Emulsionen:
   Zu einer Mischung aus
   42,5 Gew.-Teilen eines Polyether-polyols mit einer Hydroxylzahl von 490, hergestellt aus Sorbitol als Startermolekül und 1,2-Propylenoxid,
   8,1 Gew.-Teilen Dipropylenglykol und
   5,8 Gew.-Teilen Glycerin
   wurden unter intensivem Rühren mit einem Ultra-Turrax® (der Firma Hanke und Kunkel GmbH + Co. KG, D-7813 Staufen) bei 23°C
   2,4 Gew.Teile einer 50 gew.%igen Lösung in Ethylacetat eines Acrylatoligomeren, hergestellt durch Copolymerisation von N-Ethylperfluoroctansulfonamidoethylmethacrylat und einem Methoxipolyoxyethylenacrylat gemäß Beispiel 2 der US-A-3 787 351 und danach
   58 Gew.-Teile Perfluor-n-hexan
   hinzugefügt. Nach kurzer Zeit erhielt man eine milchige, viskose Emulsion, die mehr als 2 Wochen lagerstabil war.
b) Herstellung eines Polyurethan-Hartschaumstoffs.
   A-Komponente:
   Mischung aus der gemäß Beispiel 1a hergestellten Emulsion, in die unter Rühren einverleibt wurden:
   1,4 Gew.-Teile Diethanolamin,
   10,4 Gew.-Teile Trichlorethylphosphat,
   2,4 Gew.-Teile N,N-Dimethylcyclohexylamin und
   2,4 Gew.-Teile Polysiloxan-Schaumstabilisator (Tegostab®B 8408 der Fa. Goldschmidt AG, Essen)
   B-Komponente:
   115 Gew.-Teile einer Mischung aus Diphenylmethan-diisocyanaten und Polyphenyl-polymethylen-polyisocyanaten mit einem NCO-Gehalt von 31 Gew.% (Lupranat®M 20S der BASF Aktiengesellschaft).
   Die A- und B-Komponente wurden bei 23°C unter intensivem Rühren vermischt, die schaumfähige Reaktionsmischung in ein offenes Formwerkzeug eingefüllt und dort aufschäumen gelassen.
   Man erhielt einen sehr feinzelligen Polyurethan-Hartschaumstoff mit einem mittleren Porendurchmesser von ungefähr 90 µm und einer Dichte von 80 g/l.

### Vergleichsbeispiel

Zu der in Beispiel 1a beschriebenen Mischung aus dem Polyether-polyol, hergestellt aus Sorbitol und 1,2-Propylenoxid, Dipropylen-glykol und Glycerin wurden analog den Angaben des Beispiels 1a, jedoch in Abwesenheit des Emulgators aus Acrylatoligomerem, Perfluor-n-hexan hinzugefügt.

Man erhielt keine stabile Emulsion, sondern ein Gemisch, das das Perfluor-n-hexan in Form von größeren Tropfen enthielt.

Diesem Gemisch wurden unter Rühren bei 23°C zunächst die übrigen Bestandteile der unter Beispiel 1b beschriebenen A-Komponente und danach die B-Komponente einverleibt.

Beim Einsetzen der Polyadditionsreaktion entwich aus der Reaktionsmischung nahezu das gesamte Perfluor-n-hexan. Eine Schaumbildung trat nicht ein.

### Beispiel 2

a) Herstellung einer treibmittelhaltigen Polyisocyanat-Emulsion
   In 115 Gew.-Teile einer Mischung aus Diphenylmethan-diisocyanaten und Polyphenyl-polymethylen-polyisocyanaten mit einem NCO-Gehalt von 31 Gew.% (Lupranat M 20S) wurden unter intensivem Rühren mit einem Ultra-Turrax zunächst 2,4 Gew.-Teile der in Beispiel 1b beschriebenen Acrylatoligomerlösung und danach 58 Gew.-Teile Perfluor-n-hexan einverleibt.
   Man erhielt eine Emulsion, die mehr als 2 Wochen lagerstabil war.
b) Herstellung eines Polyurethan-Hartschaumstoffs
   A-Komponente:
   Mischung aus
   42,5 Gew.-Teilen eines Polyether-polyols mit einer Hydroxylzahl von 490, hergestellt aus Sorbitol als Startermolekül und 1,2-Propylenoxid,
   8,1 Gew.-Teilen Dipropylenglykol,
   5,8 Gew.-Teilen Glycerin,
   1,4 Gew.-Teilen Diethanolamin,
   10,2 Gew.-Teilen Trichlorethylphosphat,
   2,4 Gew.-Teilen N,N-Dimethylcyclohexylamin und
   2,4 Gew.-Teilen Polysiloxan-Schaumstabilisator (Tegostab®B 8408 der Fa. Goldschmidt AG, Essen)
   B-Komponente:
   Treibmittelhaltige Polyisocyanat-Emulsion gemäß Beispiel 2a
   70 Gew.-Teile der A-Komponente und die Gesamtmenge der gemäß Beispiel 2a hergestellte B-Komponente wurden bei 23°C unter intensivem Rühren gemischt, die schaumfähige Reaktionsmischung in ein offenes Formwerkzeug eingefüllt und aufschäumen gelassen.
   Der erhaltene feinzellige Schaumstoff besaß eine Dichte von 89 g/l.

### Beispiel 3

a) Herstellung einer lagerstabilen, treibmittelhaltigen Emulsion
   Analog den Angaben von Beispiel 1a wurden in eine Mischung aus
   42,0 Gew.-Teilen eines Polyether-polyols mit der Hydroxylzahl von 475, hergestellt aus Sorbitol als Startermolekül und 1,2-Propylenoxid,
   20,0 Gew.-Teilen eines Polyether-polyols mit der Hydroxyzahl von 400, hergestellt aus Glycerin als Startermolekül und 1,2-Propylenoxid und
   8,0 Gew.-Teilen eines Polyether-polyols mit der Hydroxylzahl von 760, hergestellt aus Ethylendiamin und 1,2-Propylenoxid
   1,7 Gew.-Teile eines Acrylatoligomeren, hergestellt durch Copolymerisation von N-Butylperfluoroctansulfonamidoethylacrylat und eines Polyoxyethylen-polyoxy propylen-polyoxyethylenacrylats gemäß Beispiel 1 der US-A-3 787 351 und danach
   40 Gew.-Teile Perfluor-n-pentan
   eingebracht.
   Man erhielt nach kurzer Zeit eine milchige, viskose Emulsion, die mehr als 2 Wochen lagerstabil war.
b) Herstellung eines Polyurethan-Hartschaumstoffs
   A-Komponente:
   Mischung aus
   42,0 Gew.-Teilen eines Polyether-polyols mit der Hydroxylzahl von 475, hergestellt aus Sorbitol als Startermolekül und 1,2-Propylenoxid,
   20,0 Gew.-Teilen eines Polyether-polyols mit der Hydroxyzahl von 400, hergestellt aus Glycerin als Startermolekül und 1,2-Propylenoxid,
   8,0 Gew.-Teilen eines Polyether-polyols mit der Hydroxylzahl von 760, hergestellt aus Ethylendiamin und 1,2-Propylenoxid,
   2,3 Gew.-Teilen Triethanolamin,
   2,9 Gew.-Teilen Trichlorethylphosphat,
   0,9 Gew.-Teilen eines Polysiloxan-Schaumstabilisators (DC 190 der Fa. Dow Corning) und
   1,2 Gew.-Teilen Triethylamin
   B-Komponente:
   Mischung aus Diphenylmethan-diisocyanaten und Polyphenyl-polymethylenpolyisocyanaten mit einem NCO-Gehalt von 31 Gew.-% (Lupranat®M 50 der BASF Aktiengesellschaft)
   Aus 38 Gew.-Teilen der A-Komponente,
   0,9 Gew.-Teilen des in Beispiel 3a beschriebenen Acrylatoligomeren und
   20,0 Gew.-Teilen Perfluor-n-pentan
   wurden analog den Angaben des Beispiels 1a eine Emulsion hergestellt, die mit
   59 Gew.-Teilen der B-Komponente unter intensivem Rühren gemischt wurde bei 23°C.
   Die schaumfähige Reaktionsmischung wurde in ein offenes Formwerkzeug eingefüllt und darin aufschäumen gelassen.
   Man erhielt einen feinzelligen Polyurethan-Hartschaumstoff der Dichte 105 g/l.

### Beispiel 4

### A-Komponente:

Mischung aus
70 Gew.-Teilen eines Polyether-glykols mit der Hydroxylzahl von 23, hergestellt aus Ethylenglykol als Startermolekül und Polyaddition von 1,2-Propylenoxid und anschließend Ethylenoxid im Gewichtsverhältnis 75:25 (bezogen auf die Alkylenoxide),
18 Gew.-Teilen eines Polyether-polyols mit der Hydroxyzahl von 35, hergestellt aus Glycerin als Startermolekül und Polyaddition von 1,2-Propylenoxid und anschließend Ethylenoxid im Gewichtsverhältnis 75:25 (bezogen auf die Alkylenoxide),
10,5 Gew.-Teilen Butandiol-1,4,
1,0 Gew.-Teilen eines Schaumstabilisators auf Silikonbasis (DC 193 der Fa. Dow Corning),
0,5 Gew.-Teilen Triethylendiamin und
0,02 Gew.-Teilen Dibutylzinndilaurat.

### B-Komponente:

Urethangruppen enthaltendes Quasiprepolymeres mit einem NCO-Gehalt von 23 Gew.%, hergestellt durch Umsetzung von Dipropylenglykol mit 4,4′-Diphenylmethan-diisocyanat bei 80°C.
a) Herstellung eines Polyurethan-Weichschaumstoffs
   Aus 100 Gew.-Teilen der A-Komponente,
   1,0 Gew.-Teilen eines Acrylatoligomeren, hergestellt durch Copolymerisation von N-Ethylperfluoroctansulfonamidoethylmethacrylat und einem Methoxipolyoxyethylenacrylat gemäß Beispiel 2 der US-A-3 787 351 und
   5,0 Gew.-Teilen Perfluor-n-hexan
   wurde analog den Angaben des Beispiels 1a eine stabile, treibmittelhaltige Emulsion hergestellt, die mit 50 Gew.-Teilen der B-Komponente bei 23°C unter intensivem Rühren gemischt wurde.
   Die schaumfähige Reaktionsmischung wurde in ein offenes Formwerkzeug eingefüllt und darin aufschäumen gelassen.
   Man erhielt einen feinzelligen Polyurethan-Weichschaumstoff der Dichte 200 g/l.
b) Herstellung eines Integralpolyurethan-Weichschaumstoffs
   Die in Beispiel 4a beschriebene schaumfähige Reaktionsmischung wurde in einer solchen Menge in ein auf 50°C temperiertes, plattenförmiges Werkzeug mit den inneren Abmessungen 20 x 20 x 1 cm aus Aluminium eingebracht und in dem danach verschlossenen Formwerkzeug aufschäumen gelassen, daß eine Formplatte der Gesamtdichte 600 g/l resultierte.
   Man erhielt eine Schaumstoffplatte mit differentiell abnehmender Dichte zum Kern der Schaumstoffplatte und einer stark ausgeprägten im wesentlichen kompakten Oberflächenzone. Die Formplatte besaß eine Reißdehnung nach DIN 53 504 von 350 % und eine Oberflächenhärte nach Shore A von 70.

### Beispiel 5

### Herstellung eines Polyurethan-Weichschaumstoffs

### A-Komponente:

Mischung aus
100 Gew.-Teilen eines Polyetherpolyols der Hydroxylzahl 35, hergestellt aus Glycerin als Startermolekül und Polyaddition von 1,2-Propylenoxid und danach Ethylenoxid im Gewichts verhältnis 80:20 (bezogen auf die Alkylenoxide),
3,0 Gew.-Teilen Wasser,
0,15 Gew.-Teilen eines Schaumstabilisators auf Silikonbasis (Tegostab®4690 der Goldschmidt AG, Essen)
0,25 Gew.-Teilen Kaliumacetat und
0,3 Gew.-Teilen Triethylendiamin.

### B-Komponente:

Mischung aus
80 Gew.-Teilen des Urethangruppen enthaltenden Quasiprepolymeren gemäß Beispiel 4 und 20 Gew.-Teilen eines Gemisches aus Diphenylmethan-diisocyanaten und Polyphenyl-polymethylen-polyisocyaanten (Lupranat®M 20S).

Aus 104 Gew.-Teilen der A-Komponente,
2,0 Gew.-Teilen des Acrylatoligomeren, beschrieben in Beispiel 4a und 12,0 Gew.-Teilen Perfluor-n-hexan wurde analog den Angaben des Beispiels 1a eine stabile, treibmittelhaltige Emulsion hergestellt, in welche 60 Gew.-Teile der B-Komponente bei 23°C unter intensivem Rühren eingebracht wurden.

Die schaumfähige Reaktionsmischung wurde in ein offenes Formwerkzeug eingefüllt und dort aufschäumen gelassen.

Man erhielt einen sehr feinzelligen, flexiblen Polyurethan-Weichschaumstoff der Dichte 55 g/l.

### Beispiel 6

### Herstellung eines Isocyanuratgruppen enthaltenden Polyurethan-Hartschaumstoffs auf Polyesterbasis

### A-Komponente:

Mischung aus
25 Gew.-Teilen eines Diethylenglykolpolyphthalats mit der Hydroxylzahl 56,
10 Gew.-Teilen eines Diethylenglykolpolyadipats mit der Hydroxylzahl 300,
30 Gew.-Teilen Trichlorethylphosphat,
1,5 Gew.-Teilen eines Polysiloxan-Schaumstabilisators (Tegostab B 8408 der Fa. Goldschmidt AG)
0,5 Gew.-Teilen Pentamethyl-diethylentriamin und
1,0 Gew.-Teilen Kaliumacetat.

### B-Komponente:

Mischung aus Diphenylmethan-diisocyanaten und Polyphenyl-polymethylenpolyisocyanaten mit einem NCO-Gehalt von 31 Gew.% (Lupranat®M 50 der BASF Aktiengesellschaft).

Aus 50 Gew.-Teilen der A-Komponente,
1,0 Gew.-Teilen des Acrylatoligomeren, beschrieben in Beispiel 4a und
35,0 Gew.-Teilen Perfluor-n-hexan wurde analog den Angaben des Beispiels 1a eine stabile, treibmittelhaltige Emulsion hergestellt, in welche
125 Gew.-Teile der B-Komponente bei 23°C unter intensivem Rühren eingebracht wurden.

Die schaumfähige Reaktionsmischung wurde in ein offenes Formwerkzeug eingefüllt und dort aufschäumen gelassen.

Man erhielt einen feinzelligen harten Schaumstoff der Dichte 105 g/l.

## Patentansprüche

1. Verfahren zur Herstellung von zellhaltigen Kunststoffen nach dem Polyisocyanat-Polyadditionsverfanren durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren,
f) Hilfsmitteln und/oder Zusatzstoffen,
dadurch gekennzeichnet, daß man als Treibmittel (d) niedrigsiedende, bei Raumtemperatur flüssige, in (a) bis (c) schwer- oder unlösliche, teilweise oder vollständig fluorierte, aliphatische oder cycloaliphatische Kohlenwasserstoffe mit 3 bis 8 C-Atomen oder Mischungen davon verwendet und diese in den Aufbaukomponenten (a), (b), (b) und (c) oder (a) und (b) emulgiert.

2. Verfahren nach Anspruch 1, dadurch gekennzeichnet, daß man als Treibmittel (d) mindestens ein Perfluoralkan aus der Gruppe Perfluorpentan, Perfluorhexan, Perfluorheptan und Perfluoroctan und/oder mindestens ein Perfluorcycloalkan aus der Gruppe Perfluorcyclopentan und Perfluorcyclohexan verwendet.

3. Verfahren nach Anspruch 1 oder 2, dadurch gekennzeichnet, daß man 1 bis 60 Gew.-Teile der niedrigsiedenden, bei Raumtemperatur flüssigen, in (a) bis (c) schwer- oder unlöslichen, teilweise oder vollständig fluorierten, aliphatischen oder cycloaliphatischen Kohlenwasserstoffe mit 3 bis 8 C-Atomen als Treibmittel (d), bezogen auf 100 Gew.-Teile der Aufbaukomponenten (a) bis (c) oder (a) und (b), verwendet.

4. Verfahren nach einem der Ansprüche 1 bis 3, dadurch gekennzeichnet, daß man zur Emulgierung des Treibmittels (d) in der Aufbaukomponente (a), (b) oder (b) und (c) als Emulgator oligomere Acrylate verwendet, die als Seitengruppen Polyoxyalkylen- und Fluoralkanreste gebunden enthalten.

5. Verfahren nach einem der Ansprüche 1 bis 3, dadurch gekennzeichnet, daß man zur Emulgierung des Treibmittels (d) in der Aufbaukomponente (a), (b) oder (b) und (c) als Emulgator verwendet mindestens ein mehrere fluoraliphatische Seitengruppen enthaltendes Oligomeres mit einem Fluorgehalt von 5 bis 30 Gew.%, bezogen auf das Gesamtgewicht, und den Formeln
(R_{f})ₘQ(RQ'A)ₙ (I)
oder
[(R_{f})ₘQ(RQ'A')ₙ]_{z} (II)
in welchen bedeuten:
R_{f} eine fluoraliphatische Gruppe mit 3 bis 20 Kohlenstoffatomen und 40 bis 78 Gew.% Fluor, wobei die Endgruppe mindestens 3 vollständig fluorierte Kohlenstoffatome enthält,
R eine in Kunststoff löslich machende zweiwertige organische Gruppe, die frei von funktionellen Gruppen ist, welche aktiven Wasserstoff enthalten,
Q eine Bindungsgruppe durch die die R_{f}- und R-Gruppen kovalent miteinander verbunden sind,
A eine einwertige organische Endgruppe,
A' A oder eine Valenzbindung, unter der Voraussetzung, daß mindestens ein A' eine Valenzbindung ist, die eine Q-gebundene Gruppe mit einem anderen Q verbindet,
Q' eine Bindungsgruppe, durch die A oder A' und R kovalent aneinander gebunden sind, und
m, n und z ganze Zahlen von mindestens 2 sind.

6. Verfahren nach einem der Ansprüche 1 bis 5, dadurch gekennzeichnet, daß man den Emulgator zur Emulgierung des Treibmittels (d) in der Aufbaukomponente (a), (b) oder (b) und (c) in einer Menge von 0,01 bis 6,0 Gew.-Teilen pro 100 Gew.-Teilen der Aufbaukomponente (a), (b) oder (b) und (c) verwendet.

7. Lagerstabile, treibmittelhaltige Emulsionen, die enthalten
i) mindestens einen niedrigsiedenden, bei Raumtemperatur flüssigen, in (a) oder (b) schwer- oder unlöslichen, teilweise oder vollständig fluorierten, aliphatischen und/oder cycloaliphatischen Kohlenwasserstoff mit 3 bis 8 Konlenstoffatomen als Treibmittel (d)
ii) mindestens ein organisches und/oder modifiziertes organisches Polyisocyanat (a) oder mindestens eine höhermolekulare Verbindung mit mindestens zwei reaktiven Wasserstoffatomen (b) oder Mischungen aus (b) und niedermolekularen Kettenverlängerungs- und/oder Vernetzungsmitteln (c) und
iii) mindestens ein oligomeres Acrylat, das als Seitengruppen Polyoxyalkylen- und Fluoralkanreste gebunden enthält, als Emulgator.

8. Lagerstabile, treibmittelhaltige Emulsionen, bestehend aus
i) 1 bis 150 Gew.-Teilen, pro 100 Gew.-Teilen von (a) oder (b), mindestens eines niedrigsiedenden, bei Raumtemperatur flüssigen in (a) oder (b) schwer- oder unlöslichen, teilweise oder vollständig fluorierten, aliphatischen und/oder cycloaliphatischen Kohlenwasserstoffs mit 3 bis 8 Kohlenstoffatomen als Treibmittel (d),
ii) mindestens einem organischen und/oder modifizierten organischen Polyisocyanat (a) oder mindestens einer höhermolekularen Verbindung mit mindestens zwei reaktiven Wasserstoffatomen (b) oder einer Mischung aus (b) und niedermolekularen Kettenverlängerungs- und/oder Vernetzungsmitteln (c) und
iii) 0,01 bis 6,0 Gew.-Teilen pro 100 Gew.-Teilen von (a) oder (b) mindestens eines oligomeren Acrylats, das als Seitengruppen Polyoxyalkylen- und Fluoralkanreste gebunden enthält, als Emulgator.

9. Lagerstabile, treibmittelhaltige Emulsionen nach Anspruch 7 oder 8, dadurch gekennzeichnet, daß die fluorierten Kohlenwasserstoffe ausgewählt sind aus der Gruppe Perfluorpentan, Perfluorcyclopentan, Perfluorhexan, Perfluorcyclohexan, Perfluorheptan und Perfluoroctan.

10. Lagerstabile, treibmittelhaltige Emulsionen nach Anspruch 7 oder 8, dadurch gekennzeichnet, daß die organischen und/oder modifizierten organischen Polyisocyanate (a) ausgewählt sind aus der Gruppe 2,4-, 2,6-Toluylen-diisocyanat oder Mischungen der genannten Isomeren, 4,4'-, 2,4'- und 2,2'-Diphenylmethan-diisocyanat oder Mischungen von mindestens zwei der genannten Isomeren und Mischungen aus Diphenylmethan-diisocyanaten und Polyphenyl-polymethylen-polyisocyanaten.

11. Lagerstabile, treibmittelhaltige Emulsionen nach Anspruch 7 oder 8, gekennzeichnet, daß man als höhermolekulare Verbindungen (b) mindestens ein Polyester-polyol mit einer Funktionalität von 2 bis 3 und einem Molekulargewicht von 480 bis 3000 verwendet.

12. Lagerstabile, treibmittelhaltige Emulsionen nach Anspruch 7 oder 8, dadurch gekennzeichnet, daß man als höhermolekulare Verbindung (b) mindestens ein Polyether-polyol mit einer Funktionalität von 2 bis 6 und einem Molekulargewicht von 400 bis 8000 verwendet.

13. Lagerstabile treibmittelhaltige Emulsionen nach Anspruch 7 oder 8, dadurch gekennzeichnet, daß man als oligomeres Acrylat mindestens ein mehrere fluoraliphatische Seitengruppen enthaltendes Oligomeres mit einem Fluorgehalt von 5 bis 30 Gew.%, bezogen auf das Gesamtgewicht, und den Formeln
(R_{f})ₘQ(RQ'A)ₙ (I)
oder
[(R_{f})ₘQ(RQ'A')ₙ]_{z} (II)
verwendet, in welchen bedeuten:
R_{f} eine fluoraliphatische Gruppe mit 3 bis 20 Kohlenstoffatomen und 40 bis 78 Gew.% Fluor, wobei die Endgruppe mindestens 3 vollständig fluorierte Kohlenstoffatome enthält,
R eine in Kunststoff löslich machende zweiwertige organische Gruppe, die frei von funktionellen Gruppen ist, welche aktiven Wasserstoff enthalten,
Q eine Bindungsgruppe durch die die R_{f}- und R-Gruppen kovalent miteinander verbunden sind,
A eine einwertige organische Endgruppe,
A' A oder eine Valenzbindung, unter der Voraussetzung, daß mindestens ein A' eine Valenzbindung ist, die eine Q-gebundene Gruppe mit einem anderen Q verbindet,
Q' eine Bindungsgruppe ist, durch die A oder A' und R kovalent aneinander gebunden sind, und
m, n und z ganze Zahlen von mindestens 2 sind.

14. Lagerstabile, treibmittelhaltige Emulsionen nach Anspruch 13, dadurch gekennzeichnet, daß R die Formel (OR')ₓ aufweist, in der R' eine Alkylengruppe mit 2 bis 4 Kohlenstoffatomen, insbesondere eine Ethylengruppe, und x eine ganze Zahl von gleich oder größer als 5 bedeuten.

15. Lagerstabile, treibmittelhaltige Emulsionen nach Anspruch 13, dadurch gekennzeichnet, daß R_{f} eine perfluorierte Alkylgruppe mit 6 bis 12 Kohlenstoffatomen und einem Fluorgehalt von 50 bis 77 Gew.% ist und die Endgruppe von R_{f} die Formel CF₃CF₂CF₂- besitzt.

16. Verwendung der lagerstabilen treibmittelhaltigen Emulsionen nach ein: der Ansprüche 7 bis 15 zur Herstellung von Urethan- oder Urethan- und Isocyanuratgruppen enthaltenden Schaumstoffen nach dem Polyisocyanat-Polyadditionsverfahren.

17. Verwendung der lagerstabilen, treibmittelhaltigen Emulsionen nach einem der Ansprüche 7 bis 15 zur Herstellung von Urethan- und/oder Harnstoffgruppen enthaltenden zelligen Elastomeren nach dem Polyisocyanat-Polyadditionsverfahren.

## Claims

1. A process for the preparation of cellular plastics by the polyisocyanate polyaddition process by reacting
a) organic and/or modified organic polyisocyanates with
b) at least one relatively high-molecular-weight compound containing at least two reactive hydrogen atoms, and, if desired,
c) low-molecular-weight chain extenders and/or cross-linking agents,
in the presence of
d) blowing agents,
e) catalysts,
f) auxiliaries and/or additives,
wherein the blowing agents (d) used are low-boiling, partially or fully fluorinated, aliphatic or cycloaliphatic hydrocarbons having 3 to 8 carbon atoms which are liquid at room temperature and are sparingly soluble or insoluble in (a) to (c), or mixtures thereof, and these are emulsified in the formative components (a), (b), (b) and (c), or (a) and (b).

2. A process as claimed in claim 1, wherein the blowing agents (d) used are at least one perfluoroalkane from the group consisting of perfluoropentane, perfluorohexane, perfluoroheptane and perfluorooctane, and/or at least one perfluorocycloalkane from the group consisting of perfluorocyclopentane and perfluorocyclohexane.

3. A process as claimed in claim 1 or 2, wherein from 1 to 60 parts by weight of the low-boiling, partially or fully fluorinated, aliphatic or cycloaliphatic hydrocarbon having 3 to 8 carbon atoms which is liquid at room temperature and is sparingly soluble or insoluble in (a) to (c) are used, based on 100 parts by weight of the formative components (a) to (c) or (a) and (b).

4. A process as claimed in any of claims 1 to 3, wherein the blowing agent (d) is emulsified in formative component (a), (b) or (b) and (c) using, as emulsifier, oligomeric acrylates containing, as side groups, bonded polyoxyalkylene and fluoroalkane radicals.

5. A process as claimed in any of claims 1 to 3, wherein the blowing agent (d) is emulsified in formative component (a), (b) or (b) and (c) using, as emulsifier, at least one oligomer containing a plurality of fluoroaliphatic side groups and having a fluorine content of from 5 to 30% by weight, based on the total weight, and having the formula
(R_{f})ₘQ(RQ'A)ₙ (I)
or
[(R_{f})ₘQ(RQ'A')ₙ]_{z} (II)
where
R_{f} is a fluoroaliphatic group having 3 to 20 carbon atoms and 40 to 78% by weight of fluorine, where the terminal group contains at least 3 fully fluorinated carbon atoms,
R is a divalent organic group which makes the emulsifier soluble in plastic and is free from functional groups containing active hydrogen,
Q is a bonding group via which R_{f} and R are covalently bonded to one another,
A is a monovalent organic terminal group,
A' is A or a valence bond, with the proviso that at least one A' is a valence bond which connects a Q-bonded group to another Q,
Q' is a bonding group via which A or A' and R are covalently bonded to one another, and
m, n and z are integers of at least 2.

6. A process as claimed in any of claims 1 to 5, wherein the emulsifier for the emulsification of the blowing agent (d) in the formative component (a), (b) or (b) and (c) is used in an amount of from 0.01 to 6.0 parts by weight per 100 parts by weight of formative component (a), (b) or (b) and (c).

7. A blowing agent-containing emulsion with a long shelf life which contains
i) at least one low-boiling, partially or fully fluorinated, aliphatic and/or cycloaliphatic hydrocarbon having 3 to 8 carbon atoms which is liquid at room temperature and is sparingly soluble or insoluble in (a) or (b) as blowing agent (d),
ii) at least one organic and/or modified organic polyisocyanate (a) or at least one relatively high-molecular-weight compound containing at least two reactive hydrogen atoms (b), or mixtures of (b) and low-molecular-weight chain extenders and/or cross-linking agents (c), and
iii) at least one oligomeric acrylate containing, as side groups, bonded polyoxyalkylene and fluoroalkane radicals, as emulsifier.

8. A blowing agent-containing emulsion with a long shelf life which comprises
i) from 1 to 150 parts by weight, per 100 parts by weight of (a) or (b), of at least one low-boiling, partially or fully fluorinated, aliphatic and/or cycloaliphatic hydrocarbon having 3 to 8 carbon atoms which is liquid at room temperature and is sparingly soluble or insoluble in (a) or (b) as blowing agent (d),
ii) at least one organic and/or modified organic polyisocyanate (a) or at least one relatively high-molecular-weight compound containing at least two reactive hydrogen atoms (b), or mixtures of (b) and low-molecular-weight chain extenders and/or cross-linking agents (c), and
iii) from 0.01 to 6.0 parts by weight, per 100 parts by weight of (a) or (b) of at least one oligomeric acrylate containing, as side groups, bonded polyoxyalkylene and fluoroalkane radicals, as emulsifier.

9. A blowing agent-containing emulsion with a long shelf life as claimed in claim 7 or 8, wherein the fluorinated hydrocarbons are selected from the group consisting of perfluoropentane, perfluorocyclopentane, perfluorohexane, perfluorocyclohexane, perfluoroheptane and perfluorooctane.

10. A blowing agent-containing emulsion with a long shelf life as claimed in claim 7 or 8, wherein the organic and/or modified organic polyisocyanates (a) are selected from the group consisting of 2,4- and 2,6-tolylene diisocyanate or mixtures of said isomers, 4,4'-, 2,4'- and 2,2'-diphenylmethane diisocyanate or mixtures of at least two of said isomers, and mixtures of diphenylmethane diisocyanates and polyphenyl-polymethylene polyisocyanates.

11. A blowing agent-containing emulsion with a long shelf life as claimed in claim 7 or 8, wherein the relatively high-molecular-weight compounds (b) are at least one polyester-polyol having a functionality of from 2 to 3 and a molecular weight of from 480 to 3000.

12. A blowing agent-containing emulsion with a long shelf life as claimed in claim 7 or 8, wherein the relatively high-molecular-weight compound (b) is at least one polyether-polyol having a functionality of from 2 to 6 and a molecular weight of from 400 to 8000.

13. A blowing agent-containing emulsion with a long shelf life as claimed in claim 7 or 8, wherein the oligomeric acrylate used is at least one oligomer containing a plurality of fluoroaliphatic side groups and having a fluorine content of from 5 to 30% by weight, based on the total weight, and the formula
(R_{f})ₘQ(RQ'A)ₙ (I)
or
[(R_{f})ₘQ(RQ'A')ₙ]_{z} (II)
where
R_{f} is a fluoroaliphatic group having 3 to 20 carbon atoms and 40 to 78% by weight of fluorine, where the terminal group contains at least 3 fully fluorinated carbon atoms,
R is a divalent organic group which makes the emulsifier soluble in plastic and is free from functional groups containing active hydrogen,
Q is a bonding group via which R_{f} and R are covalently bonded to one another,
A is a monovalent organic terminal group,
A' is A or a valence bond, with the proviso that at least one A' is a valence bond which connects a Q-bonded group to another Q,
Q' is a bonding group via which A or A' and R are covalently bonded to one another, and
m, n and z are integers of at least 2.

14. A blowing agent-containing emulsion with a long shelf life as claimed in claim 13, wherein R has the formula (OR')ₓ, where R' is alkylene having 2 to 4 carbon atoms, in particular ethylene, and x is an integer greater than or equal to 5.

15. A blowing agent-containing emulsion with a long shelf life as claimed in claim 13, wherein R_{f} is perfluorinated alkyl having 6 to 12 carbon atoms and a fluorine content of from 50 to 77% by weight, and the terminal group of R_{f} has the formula CF₃CF₂CF₂-.

16. The use of a blowing agent-containing emulsion with a long shelf life as claimed in any of claims 7 to 15 for the production of foams containing urethane groups or urethane and isocyanurate groups by the polyisocyanate polyaddition process.

17. The use of a blowing agent-containing emulsion with a long shelf life as claimed in any of claims 7 to 15 for the production of cellular elastomers containing urethane and/or urea groups by the polyisocyanate polyaddition process.

## Revendications

1. Procédé de fabrication de matières plastiques cellulaires selon le procédé de polyaddition de polyisocyanate par réaction de
a) polyisocyanates organiques et/ou organiques modifiés, avec
b) au moins un composé à poids moléculaire élevé ayant au moins deux atomes d'hydrogène réactifs et éventuellement
c) des moyens de prolongation de chaîne et/ou de réticulation à
faible poids moléculaire en présence
d) de gonflants
e) de catalyseurs
f) d'auxiliaires et/ou additifs
caractérisé par le fait qu'on utilise comme gonflants (d) des hydrocarbures de 3 à 8 atomes C, aliphatiques ou cycloaliphatiques, partiellement en totalement fluorés à bas poids d'ébullition, liquides à la température ambiante, difficilement solubles ou insolubles dans (a) à (c), ou des mélanges de ceux-ci et on émulsionne ceux-ci dans les composants de structure (a), (b), (b) et (c) ou (a) et (b).

2. Procédé selon la revendication 1, caractérisé par le fait qu'on utilise comme gonflants (d) au moins un perfluoralcane des groupes perfluorpentane, perfluorhexane, perfluorheptane et perfluoroctane et/ou au moins un perfluorcycloalcane des groupes perfluorcyclopentane et perfluorcyclohexane.

3. Procédé selon la revendication 1 ou 2, caractérisé par le fait qu'on utilise comme gonflant (d) 1 à 60 parties en poids des hydrocarbures de 3 à 8 atomes C, aliphatiques ou cycloaliphatiques, partiellement en totalement fluorés à bas poids d'ébullition, liquides à la température ambiante, difficilement solubles ou insolubles dans (a) à (c), proportion rapportée à 100 parties en poids des composants de structure (a) à (c) ou (a) et (b).

4. Procédé selon l'une des revendications 1 à 3, caractérisé par le fait que pour émulsionner le gonflant (d) dans les composants (a), (b) ou (b) et (c), on utilise comme émulsifiant des acrylates oligomères qui contiennent, liés comme groupes latéraux, des restes polyoxyalkylène et fluoralcane.

5. Procédé selon l'une des revendications 1 à 3, caractérisé par le fait que pour émulsionner le gonflant (d) dans les composants (a), (b) ou (b) et (c), on utilise comme émulsifiant au moins un oligomère contenant plusieurs groupes latéraux fluoraliphatiques, avec une teneur en fluor de 5 à 30 % en poids, rapportée au poids total et des formules
(R_{f})ₘQ(RQ'A)ₙ (I)
ou
[(R_{f})ₘQ(RQ'A')ₙ]_{z} (II)
dans lesquelles
R_{f} représente un groupe fluoraliphatique de 3 à 20 atomes de carbone et 40 à 78 % en poids de fluor, le groupe d'extrémité contenant au moins 3 atomes de carbone totalement fluorés
R un groupe organique bivalent solubilisant dans la matière plastique, qui est exempt de groupes fonctionnels qui contiennent de l'hydrogène actif
Q un groupe de liaison par lequel sont reliés entre eux covalents les groupes R_{f} et R
A un groupe d'extrémité organique monovalent
A', A ou une liaison de valeur, à la condition qu'au moins un A' est une liaison de valeur qui relie un groupe lié par Q avec un autre Q
Q' un groupe de liaison par lequel A ou A' et R sont liés l'un à l'autre covalents ; et
m, n et z sont des nombres entiers d'au moins 2.

6. Procédé selon l'une des revendications 1 à 5, caractérisé par le fait que l'on utilise l'émulsifiant pour émulsionner le gonflant (d) dans les composants (a), (b) ou (b) et (c) en quantité de 0,01 à 6,0 parties en poids pour 100 parties en poids des composants (a), (b) ou (b) et (c).

7. Emulsions contenant des gonflants stables ou stockage qui contiennent, comme émulsionnant :
i) au moins un hydrocarbure de 3 à 8 atomes C, aliphatiques ou cycloaliphatiques, partiellement en totalement fluorés à bas poids d'ébullition, liquides à la température ambiante, difficilement solubles ou insolubles dans (a) à (c),
ii) au moins un polyisocyanate (a) organique et/ou organique modifié ou au moins un composé à haut poids moléculaire à au moins deux atomes d'hydrogène réactifs (b) ou des mélanges de (b) et d'agents de prolongation de chaîne et/ou réticulation (c) à bas poids moléculaire et
iii) au moins un acrylate oligomère qui contient liés, comme groupes latéraux, des restes polyalkylène et fluoralcane.

8. Emulsions contenant des gonflants stables ou stockage constitués de
i) comme gonflant 1 à 150 parties en poids, pour 100 parties en poids de (a) ou (b) au moins d'un hydrocarbure de 3 à 8 atomes C, aliphatiques ou cycloaliphatiques, partiellement en totalement fluorés à bas poids d'ébullition, liquides à la température ambiante, difficilement solubles ou insolubles dans (a) à (c),
ii) au moins un polyisocyante (a) organique et/ou organique modifié ou au moins un composé à haut poids moléculaire à au moins deux atomes d'hydrogène réactifs (b) ou des mélanges de (b) et d'agents de prolongation de chaîne et/ou réticulation (c) à bas poids moléculaire et
iii) comme émulsionnant 0,01 à 6,0 parties en poids pour 100 parties en poids de (a) ou (b) de au moins un acrylate oligomère qui contient liés, comme groupes latéraux, des restes polyalkylène et fluoralcane.

9. Emulsions contenant des gonflants stables ou stockage selon la revendication 7 ou 8, caractérisés par le fait que les hydrocarbures fluorés sont choisis dans le groupe de perfluorpentane, perfluorcyclopentane, perfluorhexane, perfluorheptane et perfluoroctane.

10. Emulsions contenant des gonflants stables ou stockage selon la revendication 7 ou 8, caractérisés par le fait que les polyisocyanates (a) organiques ou organiques modifiés sont choisis dans le groupe 2,4-, 2,6-toluylène-diisocyanate ou mélanges de isomères indiqués, 4,4'-, 2,4'- et 2,2'-diphénylméthan-diisocyanate ou mélanges d'au moins deux des isomères indiqués et mélanges de diphénylméthan-diisocyanates et polyphényl-polyméthylènepolyisocyanates.

11. Emulsions contenant des gonflants stables ou stockage selon la revendication 7 ou 8, caractérisés par le fait qu'on utilise comme composé (b) à haut poids moléculaire, au moins un polyesterpolyol à fonctionnalité de 2 à 3 et un poids moléculaire de 480 à 3000.

12. Emulsions contenant des gonflants stables ou stockage selon la revendication 7 ou 8, caractérisés par le fait qu'on utilise comme composé (b) à haut poids moléculaire, au moins un polyesterpolyol à fonctionnalité de 2 à 6 et poids moléculaire de 400 à 8000.

13. Emulsions contenant des gonflants stables ou stockage selon la revendication 7 ou 8, caractérisés par le fait qu'on utilise comme acrylate oligomère au moins un oligomère contenant plusieurs groupes latéraux fluoraliphatiques, avec une teneur en fluor de 5 à 30 % en poids, rapportée au poids total et des formules
38. (R_{f})ₘQ(RQ'A)ₙ (I)
ou
[(R_{f})ₘQ(RQ'A')ₙ]_{z} (II)
dans lesquelles
R_{f} représente un groupe fluoraliphatique de 3 à 20 atomes de carbone et 40 à 78 % en poids de fluor, le groupe d'extrémité contenant au moins 3 atomes de carbone totalement fluorés,
R un groupe organique bivalent solubilisant dans la matière plastique, qui est exempt de groupes fonctionnels qui contiennent de l'hydrogène actif,
Q un groupe de liaison par lequel sont reliés entre eux covalents les groupes R_{f} et R,
A un groupe d'extrémité organique monovalent,
A', A ou une liaison de valeur, à la condition qu'au moins un A' est une liaison de valeur qui relie un groupe lié par Q avec un autre Q,
Q' un groupe de liaison par lequel A ou A' et R sont liés l'un à l'autre covalents ; et
m, n et z sont des nombres entiers d'au moins 2.

14. Emulsions contenant des gonflants stables ou stockage selon la revendication 13, caractérisés par le fait que R représente la formule (OR')ₓ dans laquelle R' est un groupe alkylène de 2 à 4 atomes C, en particulier un groupe éthylène et x un nombre entier égal ou supérieur à 5.

15. Emulsions contenant des gonflants stables ou stockage selon la revendication 13, caractérisés par le fait que R_{f} est un groupe alkyle perfluoré de 8 à 12 atomes C et une teneur en fluor de 50 à 77 % en poids et le groupe extrait R_{f} possède la formule CF₃CF₂CF₂-.

16. Utilisation des émulsions contenant des gonflants stables ou stockage selon l'une des revendications 7 à 15 pour la fabrication, par le procédé de polyisocyanate-polyaddition, de matières alvéolaires contenant des groupes uréthanne ou uréthanne et isocyanurate.

17. Utilisation des émulsions contenant des gonflants stables ou stockage selon l'une des revendications 7 à 15 pour la fabrication, par le procédé de polyisocyanate-polyaddition, d'élastomères cellulaires contenant des groupes uréthanne et/ou urée.
